# EUROPEAN PATENT SPECIFICATION

(11) **EP 3 428 487 B1**
(45) Date of publication and mention of the grant of the patent: **10.08.2022**
(21) Application number: 18000554.8
(22) Date of filing: 25.06.2018
(51) Int. Cl.: F16J 15/02, F16J 15/06, F16J 15/12, F16L 23/18

(54) **SEALING SYSTEM FOR FLUIDS**
DICHTUNGSSYSTEM FÜR FLÜSSIGKEITEN
SYSTÈME D'ÉTANCHÉITÉ POUR FLUIDES

(30) Priority: 10.07.2017 IT 201700077191
(43) Date of publication of application: 16.01.2019
(73) Proprietor: Mec.Tre S.r.l., 10139 Torino (IT)
(72) Inventor: Panero, Giampiero, I-10139 Torino (IT)
(74) Representative: Garavelli, Paolo

(56) References cited:
- EP-A1- 0 029 686
- CN-U- 203 442 372
- US-A- 3 926 445
- US-A1- 2009 295 155
- US-A1- 2013 313 788

## Description

The present invention refers to a sealing system for fluids, in particular a sealing system of the packing type for fluids such as liquids or gases, which can be used both under standard conditions and at high temperatures and when there are aggressive chemical components.

Sealing systems for fluids are known in the art and use packings for insulating shafts, stems and housings from gas or liquid blows-by.

The main application sectors are:
- static seals (for example covers, frames, oven doors, boilers);
- valve stem seals;
- seals for alternatively moving shafts (for example for piston-type pumps);
- seals on rotary shafts (for example for centrifugal pumps, mixers, stirrers).

Packings are known from ancient times as braided cords made of vegetal fibers, used to keep liquids in specific environments or to prevent liquids from entering into specific environments, for example used with the rotary shaft for ship propellers.

The concept of braiding and its packaging similar to a cord makes the packing suitable for a use with consumable length and cutting, valid and much used nowadays.

The advantage of braiding fibers and of being able to use fibers made of different material (materials not mutually compatible with joining techniques through melting and/or gluing) makes the packing suitable for assembling and transforming fibers into a technical object.

Several materials can be packaged to make packings, which resist to high temperatures and to the action of aggressive agents; for example, it is known to use packings or braids made of graphite fibers (to obtain a high chemical and thermal resistance), insulating fibers made of glass and ceramics (used in general for heat-resisting static seals), synthetic fibers such as PTFE, polyester, aramid, acrylic fibers (used to obtain a high resistance to chemical and corrosive agents), metals such as, for example, stainless steel, copper or nickel-chrome-based alloys, such as those produced by Incomel^{®} (used to reinforce the braids in order to increase the mechanical resistance to high temperatures and pressures); the use of vegetal fibers is further known, such as for example cotton, flax, hemp (used with cold water and when a high resistance to wear is required).

Packings uses in known sealing systems are impregnated with lubricants and binders having a friction-preventing function, which must have such features as not to attack the fluids or the raw materials for foodstuff and/or pharmaceutical use in contact with the packing, must not corrode the material of the seat in which it is housed, nor the materials composing the packing itself; for such purpose, mineral oils, vegetal oils, synthetic grease (for uses of a universal character), dispersed or dry graphite (for external treatments with high self-lubricating and friction-preventing power), dispersed PTFE (for packings in contact with chemical and corrosive agents), molybdenum disulfide MoS₂ (used in external treatments with self-lubricating and corrosion-preventing characteristics) are generally used.

In known sealing systems of the packing type, packings are inserted inside housings composed of one or more insulating and/or containing chambers, formed, in case of seals of shafts, between a chamber and a stuffing box and the shaft inside it; the packing is compressed in the chamber by the stuffing box to guarantee the seal to fluid, liquid or gas.

Known seals of the packing type, when used to make static planar seals or other shapes, though allowing an efficient use in contact with fluids comprising aggressive chemical agents due to the multiple usable fibers or charges, have the problem that, being packaged with a cord braid, do not allow making a perimeter sealing gasket in a single piece, but require that the packing is inserted into the housing with the two ends which are mutually in contact at the end of the perimeter and/or circumference, having sealing problems next to the junction of the two ends, which, even if adequately joined, are anyway subjected in time to slackening caused by dilatations, pressure or temperature, such that they impair the sealing integrity and functionality.

On the other hand, seals which comprise gasket made, for example, through a die or with mechanical working of shearing from slabs in a single piece, have problems which limit their realization, when the gasket have relevant sizes and/or with complex shapes, reaching a high cost in addition to having brittleness problems and difficulties for their installation and transport.

Documents EP-A1-0 029 686, CN-U-203 442 372, US-A-3 926 445, US-A1-2013/313788 and US-A1-2009/295155 disclose sealing systems for fluids according to the prior art, equipped with housing tracks having constant section and with means for offsetting the wound gaskets.

Object of the present invention is solving the above prior art problems, by providing a sealing system for fluids which is capable of guaranteeing the seal to fluids with high temperatures and with aggressive agents, using a seal of the packing type in order to solve the problem of joining the terminal edges of the braid packaged as a cord.

Another object of the invention is providing a sealing system for fluids which has a reduced cost, high practicality of assembling and disassembling and allows its use with several types of applications, with multiple combinations of packings, such as, for example, pipe fittings for ventilations, air conditioning and suction, manholes and men's steps of cisterns or tanks, trap-doors and doors of stoves and boilers, plane flanges for DIN liquid and gas piping, silencer flanges for endothermal engines, closures of ship hatches, etc.

Another object of the invention is providing a sealing system for fluids which has in its constructions technique the practicality of a correct closure keeping the parallelism of the parts to be sealing closed and the right compression of the gasket, given by its preestablished thickness, which will compel the operator to tighten the flange and/or trap-door, etc. till it reaches the contact of the surfaces with the housing support.

The above and other objects and advantages of the invention, as will appear from the following description, are obtained with a sealing system for fluids as claimed in the independent claims. Preferred embodiments and non-trivial variations of the present invention are the subject matter of the dependent claims.

It is intended that all enclosed claims are an integral part of the present description.

It will be immediately obvious that numerous variations and modifications can be made to what is described, without departing from the scope of the invention as defined in the enclosed claims.

The present invention will be better described by some preferred embodiments thereof, provided as a non-limiting example, with reference to the enclosed drawing, in which:
- Figure 1 is a top view of an embodiment of the sealing system for fluids according to the present invention;
- Figure 2 is a partial top and side sectional view of an embodiment of the sealing system for fluids according to the present invention;
- Figure 3 is a top view of an embodiment of the sealing system for fluids according to the present invention;
- Figure 4 is a partial side sectional view of an embodiment of the sealing system for fluids according to the present invention;
- Figure 5 is a partial perspective view of an embodiment of the sealing system for fluids according to the present invention;
- Figure 6 is a partial perspective view of an embodiment of the sealing system for fluids according to the present invention;
- Figure 7 is a perspective view of an embodiment of the sealing system for fluids according to the present invention;
- Figure 8 is a partial perspective view of an embodiment of the sealing system for fluids according to the present invention; and
- Figures 9A and 9B are a perspective view and an enlarged view of an embodiment of the sealing system for fluids according to the present invention.

With reference to the Figures, preferred embodiments of the sealing system for fluids according to the present invention are shown and described.

The sealing system for fluids 10 according to the invention comprises a housing and containing track 11, which develops itself on a plane and is adapted to house a sealing gasket 12 of the packing or braid type, comprising at least one internal wall 14 and one external wall 15, preferably mutually parallel.

In particular, the sealing system for fluids 10 of the invention is adapted to guarantee the seal to fluids such as liquids, for example water, oils, or gases, for example compressed air, natural gas, synthesis gas, etc.

The housing and containing track 11 is included between two sealing planes of the parts which must be closed with seal, said parts being adapted to be assembled in contact with the sealing gasket 12 of the packing type.

The housing and containing track 11 comprises a first part 18 having substantially constant width, which preferably corresponds to the distance between the internal wall 14 and the external wall 15, and further comprises a second part 19 which is a flanking housing whose width is greater than the width of the first part 18, in order to house between the internal wall 14 and the external wall 15 a first end 21 and a second end 22 of the packing 12 being juxtaposed; preferably, the second part 19 of the housing and containing track 11 has a width lower than one and a half or double the width of the first part 18 of the housing and containing track 11, in order to house therein the two ends of the sealing gasket 12 of the packing type, for example mutually juxtaposed or with one or more packing sections interposed, if many sections of sealing gasket 12 of the packing type are would juxtaposed inside the housing and containing track 11.

The second part 19 of the housing and containing track 11 has a width lower than one and a half or double the width of the first part 18 of the housing and containing track 11 to keep the seal, by compensating the compression to which the braid is subjected, which is the sealing gasket 12 of the packing type, inside the second part 19 which is the flanking housing of the track 11.

The sealing system for fluids 10 of the invention further comprises the sealing gasket 12 of the packing braid type inserted in the housing and containing track 11 so that its first end 21 and its second end 22 are contained in the second part 19 of the housing and containing track 11 having a greater width, preferably equal to one and a half or double the width of the first part 18, preferably mutually juxtaposed or interposed with one or more sections of the packing wound inside the housing and containing track 11.

In a preferred way, the second part 19 of the housing and containing track 11 having greater width than that of the first part 18, adapted to house the first end 21 and the second end 22 of the packing 12 juxtaposed, is composed of sections of the internal wall 14 and/or of the external wall of the housing and containing track 11 on which a recess 23 is dug, in order to enlarge the housing and containing track 11.

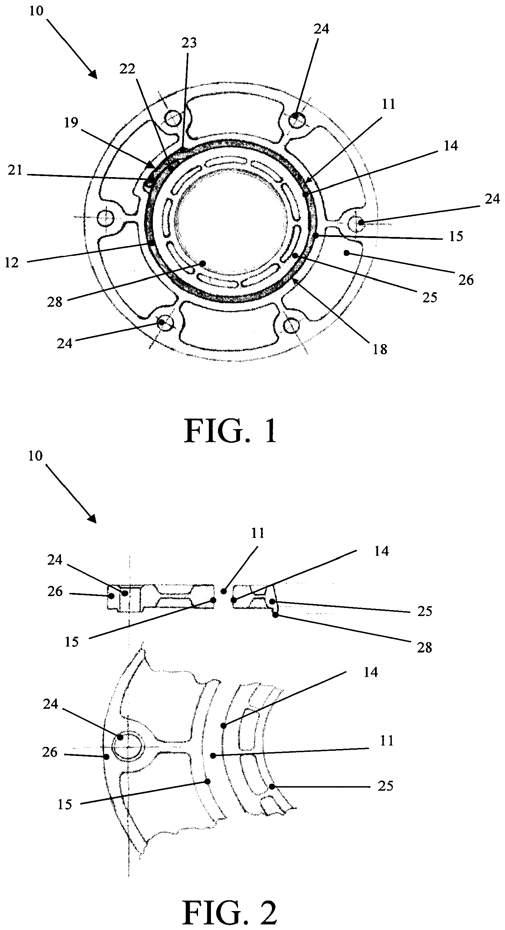

Figures 1 and 2 show an example of a first embodiment of the sealing system for fluids 10 of the invention, usable to connect with seal two plane flanges of piping for fluids, for example liquids or DIN gases.

In this first embodiment of the invention, the sealing system for fluids 10 comprises a first element 25 and a second element 26, which are shaped as a circular crown, adapted to be assembled concentric on the axis of the piping to be connected and fastened, for example screwed, on a flange of the piping.

For example, the first element 25 is inside the second element 26, and the internal wall 14 of the housing and containing track 11 is the external circumference of the first element 25, while the external wall 15 of the housing and containing track 11 is the internal circumference of the second element 26.

The first part 18 of the housing and containing track 11 having substantially constant width is composed of sections of the external circumference of the first element 25 and of the internal circumference of the second element 26 which are mutually parallel, while the second part 19 of the housing and containing track 11 having double width with respect to that of the first part 18, adapted to house the first end 21 and the second end 22 of the packing 12 juxtaposed along a radial direction, is composed of sections of the external circumference of the first element 25 and/or of the internal circumference of the second element 26 on which the recess 23 is dug, in order to enlarge the housing and containing track 11.

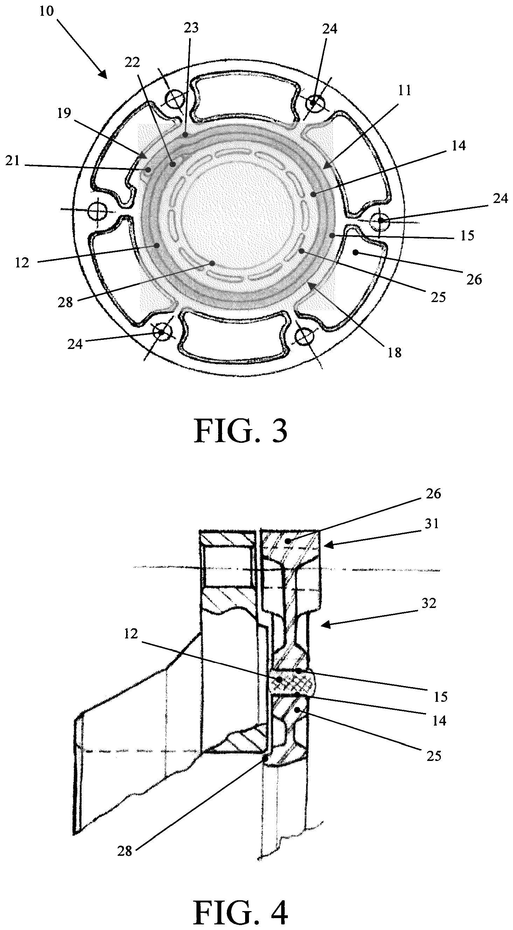

Figure 3 shows an example of a second embodiment of the sealing system for fluids 10 of the invention, usable, similarly to the system of the first embodiment of the invention, to connect with seal two plane flanges of the piping for fluids, for example liquids or DIN gases.

The sealing system for fluids 10 of this second embodiment of the invention comprises similar elements to those of the system according to the first embodiment, which in Figure 3 are designated with the same numeric references used in Figures 1 and 2, and comprises a first element 25 and a second element 26, which are shaped as a circular crown, adapted to be assembled concentric on the axis of the piping to be connected and fastened, for example screwed, on a flange of the piping.

Similarly to the sealing system for fluids 10 according to the above described first embodiment of the invention, in the second embodiment of the invention the system 10 comprises the first part 18 of the housing and containing track 11 having substantially constant width and composed of sections of the external circumference of the first element 25 and of the internal circumference of the second element 26 which are mutually parallel, which is adapted to house, differently from the system according to the first embodiment of the invention, two sections of the packing 12 juxtaposed along the radial direction; the sealing system for fluids 10 of the second embodiment of the invention further comprises the second part 19 of the housing and containing track 11 having width equal to one and a half the width of the first part 18, and adapted to house the first end 21 and the second end 22 of the packing 12 mutually juxtaposed, and further juxtaposed to an intermediate portion of the packing 12; also in this second embodiment of the sealing system for fluids 10 of the invention, the second part 19 of the housing and containing track 11 is composed of sections of the external circumference of the first element 25 and/or of the internal circumference of the second element 26 on which the recess 23 is dig, in order to enlarge the housing and containing track 11.

The first element 25 and the second element 26 shaped as a circular crown of the above described embodiments of the sealing system for fluids 10 of the invention are preferably made of plastic materials, for example teflon, or, in case of severe uses from the thermal point of view made of metal, such as aluminum or iron alloya, stainless steel, etc.

In the first two embodiments of the invention, the second element 26 comprises through-seats, for example holes 24, for passing fastening screws of the flange of the piping to be connected with seal, between which the sealing system for fluids 10 of the invention is inserted.

During the installation of the sealing system for fluids 10 according to the first and second embodiment of the invention, before assembling the sealing gasket of the packing type 12 inside the housing and containing track 11, the fastening is performed of the first element 25 and of the second element 26 to the surface of a plane flange through a film of glue; afterwards, the closure is performed of bolts inserted inside the holes 24 for fastening the sealing system for fluids 10 to the flange which must be connected with seal.

Preferably, the first element 25 comprises a projecting centering edge 28, adapted to be inserted into the hole of the flange to be connected with seal.

In case of use with a pipe with collar-type flange, for example of the DIN PN 16 type, shown in Figure 4, the thickness along the axial direction of the first internal element 25 is lower than that of the second external element 26; preferably, the second external element 26 comprises an external part 31 with greater thickness, and an internal part 32 with lower thickness, for example obtained through turning, and equal to the thickness of the first internal element 25.

Advantageously, the first and the second embodiment of the sealing system for fluids 10 of the invention, having the shape of a plane disk, allow closing the bolts onto the screws till the complete contact of the flange with the first element 25 and the second element 26, and obtaining the correct compression of the sealing gasket 12 of the packing type inside the housing and containing track 11.

In particular, the first element 25 and the second element 26 of the sealing system 10 according to the first and the second embodiment of the invention can have an external edge with a different shape from the circular shape, for example a parallelogram, and follow the edge of the piping or opening which must be connected with seal.

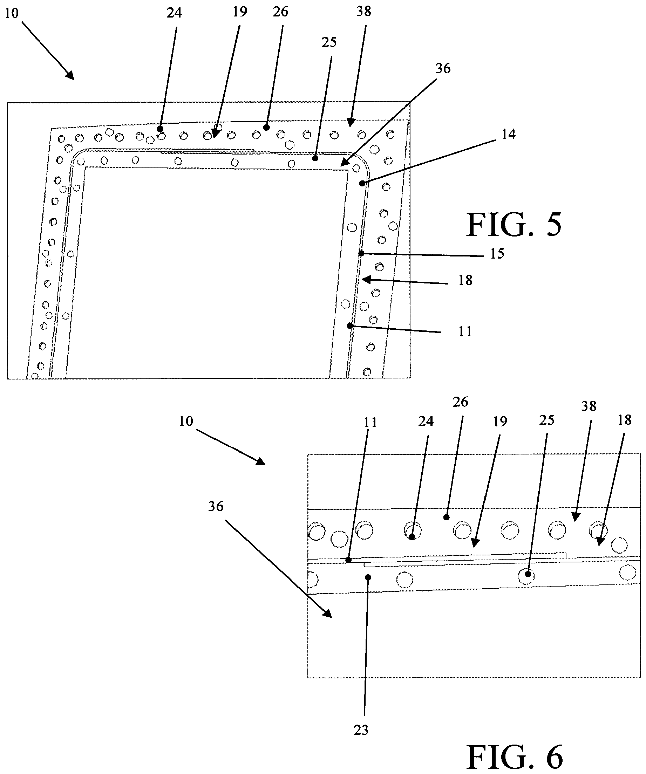

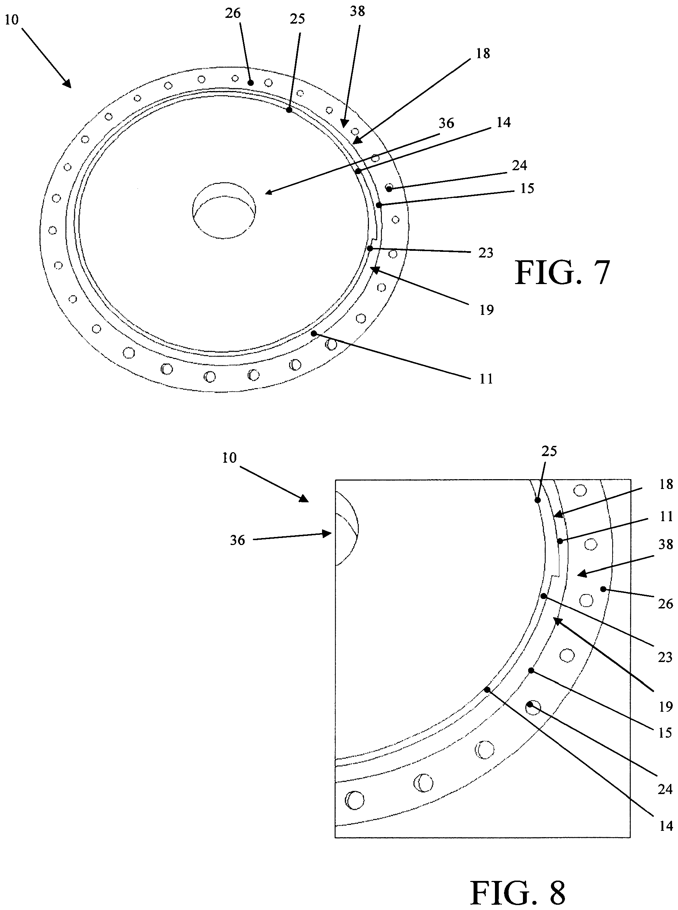

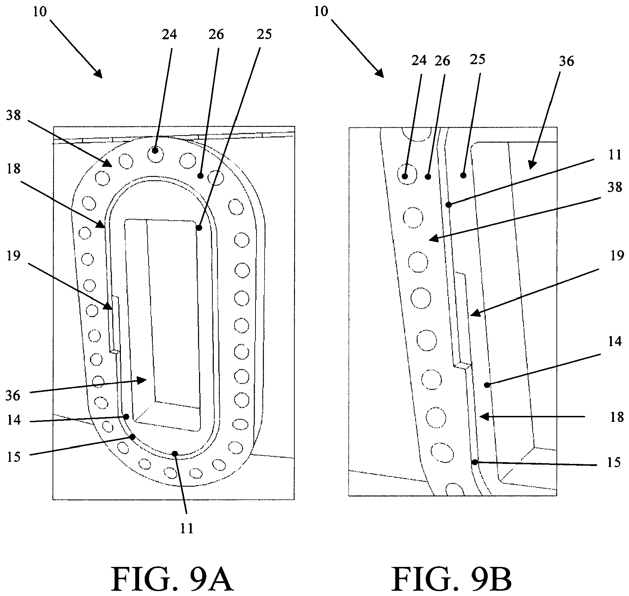

Figures 5 to 9 show examples of a third embodiment of the sealing system for fluids 10 of the invention, usable to connect with seal apertures 36 like hatches, trap-doors, manholes or covers.

In this third embodiment of the invention, the sealing system for fluids 10 comprises the first element 25 and the second element 26 which are formed in the structure of a flange 38 made around the opening 36 which must be closed with seal, and the internal wall 14 of the housing and containing track 11 is the external edge of the first element 25, the external wall 15 of the housing and containing track 11 is the internal edge of the second element 26, and the first part 18 of the housing and containing track 11 has a substantially constant width and is composed of sections of the external edge of the first element 25 and of the internal edge of the second element 26 which are mutually parallel; moreover, the second part 19 of the housing and containing track 11 is composed of sections of the external edge of the first element 25 and/or of the internal edge of the second element 26 on which the recess 23 is dug

In particular, the first element 25 and the second element 26 of the sealing system 10 according to the third embodiment of the invention can have an external edge with a different shape from the circular shape, for example a parallelogram, and follow the edge of the opening 36 which must be closed with seal.

The housing and containing track 11 is made by digging the flange, for example through a mechanical milling working, and has the same shape of the housing and containing track 11 made in the first two embodiments of the sealing system for fluids 10 of the invention, with the second part 19 of the housing and containing track 11 having double width or width equal to one and a half of the width of the first part 18, if the first end 21 and the second end 22 of the packing 12 are mutually overlapped and overlapped to an intermediate portion of the packing 12.

In the third embodiment of the invention, the second element 26 comprises seats, for example holes 24, for passing the fastening screws of the flange to be connected with seal.

Advantageously, the third embodiment of the sealing system for fluids 10 of the invention can be used with flanges having great thickness and big sizes, at high temperatures and with aggressive chemical components in the fluid.

## Claims

1. Sealing system (10) for fluids comprising:
- a packing-type sealing gasket (12),
- a housing and containing track (11) which develops on a plane and is adapted to house said packing-type sealing gasket (12) comprising at least one internal wall (14) and one external wall (15), housing and containing track (11) comprising a first part (18) having a substantially constant width and a second part (19) having a width greater than the width of the first part (18), the second part (19) of the housing and containing track (11) being composed of sections of the internal wall (14) and/or of the external wall (15) of the housing and containing track (11) on which a recess (23) is machined, **characterized in that** the packing-type sealing gasket (12) is inserted in the housing and containing track (11) with a first end (21) and a second end (22) of the sealing gasket (12) inside the second part (19) having greater width, mutually juxtaposed anc either overlapped, or with at least one section of packing interposed

2. Sealing system (10) for fluids according to claim 1, **characterized in that** the second part (19) of the housing and containing track (11) has a width lower than one and a half or double the width of the first part (18), in order to house the two ends of the packing-type sealing gasket mutually juxtaposed and either overlapped or with at least one section of packing interposed.

3. Sealing system (10) for fluids according to any one of the previous claims, **characterized in that** it comprises a first element (25) and a second element (26) whose shape is a circular crown and adapted to be assembled concentric on the axis of piping to connect with seal two flanges of the piping, and **in that** the internal wall (14) of the housing and containing track (11) is the external circumference of the first element (25), the external wall (15) of the housing and containing track (11) is the internal circumference of the second element (26), and the first part (18) of the housing and containing track (11) has a substantially constant width and is composed of sections of the external circumference of the first element (25) and of the internal circumference of the second element (26) which are mutually parallel, and the second part (19) of the housing and containing track (11) is composed of sections of the external circumference of the first element (25) and/or of the internal circumference of the second element (26) on which the recess (23) is machined.

4. Sealing system (10) for fluids according to claim 3, **characterized in that** the thickness of the first internal element (25) is lower than the thickness of the second external element (26); preferably, the second external element (26) comprises an external part (31) of a greater thickness, and an internal part (32) of a lower thickness, for example obtained through turning, and equal to the thickness of the first internal element (25).

5. Sealing system (10) for fluids according to claim 3 or 4, **characterized in that** the first element (25) comprises a centering projecting edge (28), adapted to be inserted into a hole of the flange to be connected with seal.

6. Sealing system (10) for fluids according to claim 3, **characterized in that** it comprises a first element (25) and a second element (26) formed in the structure of a flange (38) made around an opening (36) which must be closed with seal, and **in that** the internal wall (14) of the housing and containing track (11) is the external edge of the first element (25), the external wall (15) of the housing and containing track (11) is the internal edge of the second element (26), and the first part (18) of the housing and containing track (11) has a substantially constant width and is composed of sections of the external edge of the first element (25) and of the internal edge of the second element (26) which are mutually parallel, and the second part (19) of the housing and containing track (11) is composed of sections of the external edge of the first element (25) and/or of the internal edge of the second element (26) on which the recess (23) is machined.

7. Sealing system (10) for fluids according to any one of the previous claims, **characterized in that** the first element (25) and the second element (26) have an external edge whose shape is equal to that of the edge of the piping or opening which must be connected with seal.

8. Sealing system (10) for fluids according to any one of the previous claims, **characterized in that** the second element (26) comprises seats (24) for passaging fastening screws to the flanges to be connected with seal.

## Patentansprüche

1. Dichtungssystem (10) für Flüssigkeiten umfassend:
- eine Packungsdichtung (12) vom Packungstyp,
- eine Gehäuse- und Einschließungsbahn (11), die sich über eine Ebene erstreckt und geeignet ist, die Dichtung (12) vom Verpackungstyp aufzunehmen, und mindestens eine Innenwand (14) und eine Außenwand (15) umfasst, die Gehäuse- und Eindämmungsbahn (11) umfassend einen ersten Teil (18) mit einer im Wesentlichen konstanten Breite und einen zweiten Teil (19) mit einer Breite, die größer ist als die Breite des ersten Teils (18), des zweiten Teils (19) des Gehäuses und der Eindämmung Spur (11), die aus Abschnitten der Innenwand (14) und/oder der Außenwand (15) des Gehäuses- und Einschließungsbahns (11) zusammengesetzt ist, in die eine Aussparung (23) eingearbeitet ist, **dadurch gekennzeichnet, dass** die Dichtung (12) vom Packungstyp wird in die Gehäuse- und Einschließungsbahn (11) eingesetzt, wobei ein erstes Ende (21) und ein zweites Ende (22) der Dichtung (12) innerhalb des zweiten Teils (19) mit einer größeren Breite liegen, nebeneinander zB überlappt oder mit mindestens einem Teil der dazwischenliegenden Packung.

2. Dichtungssystem (10) für Flüssigkeiten nach Anspruch 1, **dadurch gekennzeichnet, dass** der zweite Teil (19) der Gehäuse- und Einschließungsbahn (11) eine Breite hat, die kleiner als das Eineinhalbfache oder Doppelte der Breite des ersten Teils ist (18), um die beiden Enden der Packungsdichtung nebeneinanderliegend und/oder überlappend oder mit mindestens einem dazwischenliegenden Packungsabschnitt aufzunehmen.

3. Dichtungssystem (10) für Flüssigkeiten nach einem der vorhergehenden Ansprüche, **dadurch gekennzeichnet, dass** es ein erstes Element (25) und ein zweites Element (26) umfasst, die die Form einer kreisförmigen Krone haben und konzentrisch darauf montiert werden können die Rohrachse zum Abdichten zweier Flansche des Rohrs, und dadurch, dass die Innenwand (14) des Gehäuses- und Einschließungsbahns (11) der Außenumfang des ersten Elements (25) ist, die Außenwand (15) des Gehäuserings und des Containments (11) der Innenumfang des zweiten Elements (26) ist, und der erste Teil (18) des Gehäuses- und Einschließungsbahns (11) eine im Wesentlichen konstante Breite hat und durch Teile des Äußeren gebildet ist Umfang des ersten Elements (25) und des Innenumfangs des zweiten Elements (26), die parallel zueinander sind, und der zweite Teil (19) der Gehäuse- und Einschließungsbahn (11) durch Abschnitte des Außenumfangs gebildet ist Umfang des ersten Elements o (25) und/oder des Innenumfangs des zweiten Elements (26), auf dem die Aussparung (23) eingearbeitet ist.

4. Dichtungssystem (10) für Fluide nach Anspruch 3, **dadurch gekennzeichnet, dass** die Dicke des ersten inneren Elements (25) geringer ist als die Dicke des zweiten äußeren Elements (26); vorzugsweise umfasst das zweite äußere Element (26) einen äußeren Teil (31) mit größerer Dicke und einen inneren Teil (32) mit geringerer Dicke, beispielsweise erhalten durch Drehen und gleich der Dicke des ersten inneren Elements (25).

5. Dichtungssystem (10) für Flüssigkeiten nach Anspruch 3 oder 4, **dadurch gekennzeichnet, dass** das erste Element (25) einen vorstehenden Zentrierrand (28) umfasst, der in ein Loch in dem abzudichtenden Flansch eingesetzt werden kann.

6. Dichtungssystem (10) für Flüssigkeiten nach Anspruch 3, **dadurch gekennzeichnet, dass** es ein erstes Element (25) und ein zweites Element (26) umfasst, die in der Struktur eines Flansches (38) gebildet sind, der um eine Öffnung (36) herum ausgebildet ist, die abgedichtet werden müssen, und dadurch, dass die Innenwand (14) der Gehäuse- und Einschließungsbahn (11) der Außenrand des ersten Elements (25) ist, die Außenwand (15) der Gehäuse- und Auffangbahn (11) ist die Innenkante des zweiten Elements (26), und der erste Teil (18) der Gehäuse- und Einschließungsbahn (11) hat eine im Wesentlichen konstante Breite und wird durch Abschnitte der Außenkante des ersten Elements (25) und der Innenkante des zweiten Elements (26), die parallel zueinander sind, und der zweite Teil (19) der Gehäuse- und Auffangbahn (11) durch Abschnitte der Außenkante des ersten Elements (25) und/oder der Innenkante des zweiten Elements (26), an der die Aussparung (23) ausgehoben ist.

7. Dichtungssystem (10) für Flüssigkeiten nach einem der vorhergehenden Ansprüche, **dadurch gekennzeichnet, dass** das erste Element (25) und das zweite Element (26) einen Außenrand von gleicher Form wie der Rohrrand aufweisen oder Öffnung, die dicht verbunden sein müssen.

8. Dichtungssystem (10) für Flüssigkeiten nach einem der vorhergehenden Ansprüche, **dadurch gekennzeichnet, dass** das zweite Element (26) Aufnahmen (24) für den Durchgang von Befestigungsschrauben an den miteinander abzudichtenden Flanschen umfasst.

## Revendications

1. Système d'étanchéité (10) pour fluides comprenant :
- un joint d'étanchéité (12) du type garniture,
- une piste de logement et de confinement (11) qui s'étend sur un plan et est adaptée pour loger ledit joint d'étanchéité (12) du type garniture et comprenant au moins une paroi interne (14) et une paroi externe (15), appelée piste de logement et de confinement (11) comprenant une première partie (18) ayant une largeur sensiblement constante et une seconde partie (19) ayant une largeur supérieure à la largeur de la première partie (18), la seconde partie (19) de la piste de logement et de confinement (11) étant composée de portions de la paroi interne (14) et/ou de la paroi externe (15) de la piste de logement et de confinement (11) sur lesquelles un évidement (23) est creusé, **caractérisé en ce que** le joint d'étanchéité (12) du type garniture est insérée dans la piste de logement et de confinement (11) avec une première extrémité (21) et une deuxième extrémité (22) du joint d'étanchéité (12) à l'intérieur de la deuxième partie (19) ayant une plus grande largeur, côte à côte ex. superposés ou avec au moins une partie de garniture interposée.

2. Système d'étanchéité (10) pour fluides selon la revendication 1, **caractérisé en ce que** la deuxième partie (19) de la piste de logement et de confinement (11) a une largeur inférieure à une fois et demie ou deux fois la largeur de la première partie (18), pour loger les deux extrémités du joint de type garniture juxtaposées et ou superposées ou avec au moins un tronçon de garniture interposé.

3. Système d'étanchéité (10) pour fluides selon l'une quelconque des revendications précédentes, **caractérisé en ce qu'**il comprend un premier élément (25) et un deuxième élément (26) ayant la forme d'une couronne circulaire et aptes à être montés concentriques sur l'axe des conduites pour assurer l'étanchéité de deux brides de la conduite, et par le fait que la paroi interne (14) de la bague de logement et de confinement (11) est la circonférence externe du premier élément (25), la paroi externe (15) de la bague de logement et de confinement (11) est la circonférence interne du deuxième élément (26), et la première partie (18) de la piste de logement et de confinement (11) a une largeur sensiblement constante et est formée par des parties de la circonférence du premier élément (25) et de la circonférence interne du second élément (26) qui sont parallèles l'une à l'autre, et la seconde partie (19) de la piste de logement et de confinement (11) est formée par des parties de la circonférence du premier élément o (25) et/ou de la circonférence interne du deuxième élément (26) sur lequel l'évidement (23) est creusé.

4. Système d'étanchéité (10) pour fluides selon la revendication 3, **caractérisé en ce que** l'épaisseur du premier élément interne (25) est inférieure à l'épaisseur du deuxième élément externe (26) ; de préférence le deuxième élément externe (26) comprend une partie externe (31) de plus grande épaisseur, et une partie interne (32) de moindre épaisseur, par exemple obtenue par décolletage, et égale à l'épaisseur du premier élément interne (25).

5. Système d'étanchéité (10) pour fluides selon la revendication 3 ou 4, **caractérisé en ce que** le premier élément (25) comporte une arête de centrage saillante (28), apte à s'insérer dans un trou de la bride à étancher.

6. Système d'étanchéité (10) pour fluides selon la revendication 3, **caractérisé en ce qu'**il comprend un premier élément (25) et un deuxième élément (26) formés dans la structure d'une bride (38) réalisée autour d'une ouverture (36) qui doit être étanche, et par le fait que la paroi interne (14) de la piste de logement et de confinement (11) est le bord externe du premier élément (25), la paroi externe (15) de la piste de logement et de confinement (11) est le bord intérieur du deuxième élément (26), et la première partie (18) de la piste de logement et de confinement (11) a une largeur sensiblement constante et est formée par des portions du bord extérieur du premier élément (25) et du bord intérieur du deuxième élément (26) qui sont parallèles entre eux, et la deuxième partie (19) de la piste de logement et de confinement (11) est formée par des portions du bord extérieur du premier élément (25) et/ou du bord intérieur du second élément (26) sur lequel est creusé l'évidement (23).

7. Système d'étanchéité (10) pour fluides selon l'une quelconque des revendications précédentes, **caractérisé en ce que** le premier élément (25) et le deuxième élément (26) présentent un bord externe de même forme que celle du bord de la conduite ou une ouverture qui doit être étroitement connectée.

8. Système d'étanchéité (10) pour fluides selon l'une quelconque des revendications précédentes, **caractérisé en ce que** le deuxième élément (26) comprend des sièges (24) pour le passage de vis de fixation aux brides à sceller entre elles.
